# EUROPÄISCHE PATENTSCHRIFT

(11) **EP 0 739 249 B1**
(45) Veröffentlichungstag und Bekanntmachung des Hinweises auf die Patenterteilung: **17.02.1999**
(21) Anmeldenummer: 95939261.4
(22) Anmeldetag: 10.11.1995
(51) Int. Cl.: B05C 1/02, C03C 17/00

(54) **VORRICHTUNG UND WALZE ZUR BESCHICHTUNG VON ROTATIONSSYMMETRISCHEN FORMKÖRPERN**
DEVICE AND ROLLER FOR COATING ROTATIONALLY SYMMETRICAL MOULDED BODIES
DISPOSITIF ET ROULEAU POUR L'ENDUCTION DE CORPS MOULES A SYMETRIE DE ROTATION

(30) Priorität: 11.11.1994 DE 4440393
(43) Veröffentlichungstag der Anmeldung: 30.10.1996
(73) Patentinhaber: SPRIMAG SPRITZMASCHINENBAU GmbH & CO KG, 73230 Kirchheim (DE)
(72) Erfinder: SCHUBERT, Bernd, D-42389 Wuppertal (DE); BÖCKELER, Hans-Peter, D-73110 Hattenhofen (DE)
(74) Vertreter: Köster, Hajo, Dr.
(86) Internationale Anmeldenummer: EP9504437
(87) Internationale Veröffentlichungsnummer: WO9614940

(56) Entgegenhaltungen:
- DE-A- 3 211 364
- DE-A- 3 325 363
- US-A- 3 839 989

## Beschreibung

Die Erfindung betrifft eine Vorrichtung und eine Walze zur Beschichtung der Außenoberfläche von rotationssymmetrischen Formkörpern, insbesondere Flaschen, sowie ein entsprechendes Verfahren.

Es sind bereits verschiedene Vorrichtungen zum Beschichten von Flaschen mit fließfähigem Material, beispielsweise Kunststoff, bekannt. Diesbezüglich wird stellvertretend auf die DE-A 28 30 316 und die darin angeführten Druckschriften verwiesen. Mit dem aus der DE-A 28 30 316 bekannten Spritz- bzw. Gießkopf soll es möglich sein, eine genaue, gleichförmige Beschichtung der Flaschen zu gewährleisten.

Zum Auftragen von Flüssigkeiten auf Flaschen sind bereits spezielle Maschinen mit einem eigenen Antrieb und einem die Flaschen auf einer Kreisbogenbahn bewegenden Transportstern bekannt. Eine derartige Vorrichtung wird beispielsweise in der EP-A 0 452 943 beschrieben. Bei dieser bekannten Vorrichtung werden die Flaschen im Transportstern durch Abwälzen auf einem feststehenden Reibsegment in Eigenrotation versetzt und dabei mit der Flüssigkeit beaufschlagt. Diese Flüssigkeit wird insbesondere zu dem Zweck aufgebracht, die bei Mehrwegflaschen nach mehreren Umläufen auftretenden Scheuerstellen sowie sonstigen Absplitterungen und Kratzer auf dem zylindrischen Flaschenrumpf abzudecken und den Flaschen ein neuwertiges Erscheinungsbild zu verleihen.

Es sind auch schon Vorrichtungen bekannt, beispielsweise aus der US-A 4586458, bei der die Flüssigkeit von einer sich relativ zu einem Auftragselement bewegenden Spritzdüse mittels Zwischenrollen übertragen wird.

Im Bereich der Getränkeindustrie besteht nun ein Bedürfnis danach, die für die Abpackung erforderlichen Hohlkörper, insbesondere Glasflaschen im Einweg- und Mehrwegbereich, immer leichter zu machen, um Material- und Transportkosten zu sparen. Die Wände von derartigen Flaschen können jedoch nicht beliebig dünn ausgebildet werden, da dies erdohebliche Risiken mit sich bringt. So sind beispielsweise mit CO₂-haltigen Getränken abgefüllte Flaschen durch die Füllmedien einem Dauerinnendruck ausgesetzt. Wird nun die Oberfläche einer dünnwandigen Flasche beschädigt, dann können derartige untaer Druck stehende Flaschen leicht bersten. Dies kann zu unübersehbaren Produkthaftungsansprüchen führen.

Hinzu kommt, daß die Außenoberfläche von Mehrwegflaschen beim Reinigen und Befüllen normalerweise beschädigt und angekratzt wird. Da das Material Glas die Eigenschaft hat, daß seine Stabilität primär durch den Zustand der Oberfläche beeinflußt wird, kann eine unter Druck stehende Glasflasche bereits bei nur geringen Schädigungen der Oberfläche bersten etc..

Es ist bereits bekannt, Flaschen mit einer Außenbeschichtung zu versehen, die die Oberfläche der Flasche vor Schädigungen während des Füllbetriebes etc. schützt und die sogar eine zersplitterte Flasche in ihrer Form "zusammenhalten kann". Als ein derartiges Beschichtungsmaterial kann man ein von der Hüls AG unter der Bezeichnung "Vesticoat" vertriebenes Produkt einsetzen, welches beschrieben ist in DE-A 29 38 309 bzw. EP-A 0 025 932 und DE-A 29 38 229 bzw. EP 0 025 994. Durch den Einsatz derartiger Materialien ist es möglich, dünnwandigere und somit leichtere Flaschen zu verwenden, die sogar sicherer sind als die bisher bekannten, unbeschichteten Glasflaschen.

Diese bekannten, fließfähigen Beschichtungsmaterialien sind aus Umweltschutzgründen lösungsmittelfrei. Dies hat den Nachteil, daß diese Beschichtungsmaterialien verhältnismäßig hochviskos sind und nicht durch einfaches Spritzen, Tauchen oder Gießen aufgetragen werden können. Diese hochviskosen Beschichtungsmaterialien werden daher derzeit strangförmig durch einen Gieß- oder Spritzkopf auf die zu beschichtende Flasche selbst aufgebracht und dann durch Verblasen oder auch durch nachgeschaltete Rollen auf der Außenoberfläche der zu beschichtenden Flasche verteilt bzw. egalisiert. In diesem Zusammenhang ist es auch bekannt, die Kunststoffstränge auf eine Rolle aufzubringen und mittels dieser auf die Außenoberfläche der zu beschichtenden Flasche zu übertragen. Bei dieser bekannten Technik wird somit die an ihrem Kopf und an ihrem Boden drehbar gehalterte Flasche gedreht; an diese gedrehte Flasche wird die genannte Rolle bzw. Walze in Anlage gebracht und mit der Flasche eine gewisse Zeit lang in Kontakt gehalten, so daß das Beschichtungsmaterial auf der Flaschenoberfläche verteilt wird. Diese bisher eingesetzten Walzen besaßen eine rein zylindrische Form. Bedingt dadurch wurde das Beschichtungsmaterial nicht gleichmäßig auf die Oberfläche der Flasche verteilt. Es kam daher zu Ausfällen und Fehlbeschichtungen. Zudem erfüllten die beschichteten Flaschen häufig nicht die an sie gestellten Qualitätskriterien.

Aufgabe der Erfindung ist es daher, eine Vorrichtung, eine Walze und ein Verfahren bereitzustellen, mit der bzw. mit dem hochviskose lösungsmittelfreie Beschichtungsmaterialien zuverlässig, gleichmäßig und reproduzierbar auf Formkörper aufgetragen werden können.

Gelöst wird diese Aufgabe durch die Lehre der Ansprüche.

Die erfindungsgemäße Vorrichtung besitzt ebenso wie die bisher bekannten Vorrichtungen eine Vorrichtung zum Transportieren und drehbaren Haltern der zu beschichtenden Formkörper. Diese Vorrichtung wird nachstehend Transportvorrichtung genannt. Die erfindungsgemäße Vorrichtung ist ferner mit einem Aufgußkopf für die Beschichtungsmasse und mit mindestens einer drehbaren, an den zu beschichtenden Formkörper andrückbaren und wieder abhebbaren Walze ausgestattet. Die Drehachse der Walze im angedrückten Zustand ist zumindest im wesentlichen parallel zur Drehachse des zu beschichtenden Formkörpers angeordnet und dient zum Verteilen der Beschichtungsmasse auf der Außenoberfläche des Formkörpers. Diese Walze wird nach Verteilen der Beschichtungsmasse von dem Formkörper wegbewegt. Die auf dem Formkörper verteilte Beschichtungsmasse wird dann auf per se bekannte Weise gehärtet, so daß sich eine schützende Außenschicht bzw. Beschichtung bildet.

Bei den dabei eingesetzten hochviskosen lösungsmittelfreien Beschichtungssystemen bzw. Lacksystemen handelt es sich insbesondere um solche mit einer Viskosität von 40 000 mps bei ca. 10°C bis zu 1 000 mps bei ca. 100°C, insbesondere 30 000 mps bei 20°C bis 5 000 mps bei 70°C.

Der hier verwendete Ausdruck "rotationssymmetrisch" ist nicht im streng mathematischen Sinne zu verstehen. Es können erfindungsgemäß auch Formkörper beschichtet werden, die von der Rotationssymmetrie geringfügig abweichen.

Der erfinderische Kern der vorliegenden Erfindung besteht nun darin, daß die Walze zum Verteilen des Beschichtungsmaterials eine zur Außenkontur des Formkörpers komplementär geformte Außenkontur besitzt. Mit anderen Worten, das Profil der Walze stellt das Negativprofil des zu beschichtenden Formkörpers dar. Man kann auch sagen, daß in dem Bereich, in dem Formkörper und Walze in Kontakt kommen, die seitliche Profillinie des auf eine Ebene projizierten Formkörpers mit der seitlichen Profillinie der ebenfalls auf eine Ebene projizierten Walze in etwa zusammenfällt. Dieses Kriterium ist auch dann erfüllbar, wenn Formkörper und Walze unterschiedlich dimensioniert sind, in diesem Fall können sich Walze und Formkörper unterschiedlich schnell drehen. Nach einer bevorzugten Ausführungsform haben Flasche und Formkörper jedoch vergleichbare bzw. ähnliche Dimensionen. Genauer gesagt bedeutet dies, daß die Summe aus dem Radius der Walze und dem Radius des Formkörpers an jedem beliebigen Punkt entlang der Längs- bzw. der Drehachse in etwa denselben Wert ergibt, der in etwa dem Abstand der beiden Drehachsen in demjenigen Zustand entspricht, in dem Formkörper und Walze aneinander gedrückt sind. Man könnte auch sagen, daß die Walze die rotationssymmetrische Negativform des zu beschichtenden Formkörpers aufweist bzw. daß die Walze, bezogen auf die Drehachse, die rotationssymmetrische Komplementärform des zu beschichtenden Formkörpers darstellt.

Gegenstand der Erfindung ist somit auch eine derartige Walze zur Beschichtung der Außenoberfläche von rotationssymmetrischen Formkörpern.

Aufgrund der Form der erfindungsgemäßen Walze ist es möglich, hochviskose Beschichtungsmaterialien bei hohen Produktionsgeschwindigkeiten gleichmäßig auf zu beschichtende Glashohlkörper zu verteilen, so daß nach dem Härten eine homogene, gleichmäßig verteilte Beschichtung erhalten wird. Die zur Anwendung gebrachten hochviskosen Beschichtungsmaterialien werden dabei zweckmäßigerweise bei einer Betriebstemperatur von 30-100°C, insbesondere bei 40-60°C verarbeitet bzw. auf diese Temperatur erwärmt.

Nach einer weiterhin bevorzugten Ausführungsform ist der Aufgußkopf bei der erfindungsgemäßen Vorrichtung derartig angeordnet, daß das Beschichtungsmaterial zuerst auf die Walze aufgebracht und dann mittels dieser Walze entweder zeitversetzt oder gleichzeitig auf den Formkörper übertragen wird. Als Aufgußkopf bzw. Auftragsvorrichtung können dabei alle bekannten, für diesen Zweck eingesetzten Einrichtungen, beispielsweise Gießleisten, Düsen etc. zur Anwendung gebracht werden. Zweckmäßigerweise wird jedoch das Beschichtungsmaterial auf die Walze aufgebracht, solange die Walze noch nicht in Kontakt mit dem zu beschichtenden Formkörper ist.

Zudem verfügt die erfindungsgemäße Vorrichtung zweckmäßigerweise über eine per se bekannte Dosiervorrichtung. Mit dieser Dosiervorrichtung kann eine im einzelnen einstellbare, definierte Menge an Beschichtungsmaterial aus einer entsprechenden Gießleiste über jeweils einzelne, zusammengefaßte Düsen auf unterschiedliche Bereiche der Walze aufgebracht werden, so daß eine möglichst gleichmäßige Verteilung erfolgen kann. Diese Dosiervorrichtung kann auch derart ausgestaltet und gesteuert sein, daß unterschiedliche Mengen an Beschichtungsmaterial gleichzeitig auf verschiedene Bereiche der Walze aufgebracht werden.

Bei der erfindungsgemäßen Vorrichtung ist zumindest entweder der Formkörper oder die Walze zwangsgedreht. Wird der Formkörper zwangsgedreht, dann wird die Walze bei Anlage des Formkörpers in die gegenläufige Richtung zwangsgedreht. Gleiches gilt vice versa, falls die Walze zwangsgedreht ist. Vorzugsweise werden Formkörper und Walze gegenläufig zwangsgedreht, insbesondere mit der gleichen Umdrehungsgeschwindigkeit. Wird das Beschichtungsmaterial zuerst auf die Walze aufgebracht, dann werden Walze und zu beschichtender Formkörper solange in Kontakt gehalten, daß das eingesetzte Beschichtungsmaterial in ausreichender Menge bzw. vollständig übertragen wird.

Nach einer weiterhin bevorzugten Ausführungsform besitzt die erfindungsgemäße Walze einen nichtelastischen Kern und ein außen darauf aufgebrachtes elastisches Übertragungsmaterial. Der Kern kann dabei ein Zylinder sein; in diesem Fall ist das Übertragungsmaterial für die Außenkontur bzw. für die Außenform der Walze "verant-wortlich". Daher ändert sich auch die Dicke des Übertragungsmaterials entsprechend der Veränderung der Form des zu beschichtenden Formkörpers entlang der Längsachse.

Nach einer weiterhin bevorzugten Ausführungsform besitzt das elastische Übertragungsmaterial über die gesamte Länge in etwa eine gleiche Schichtdicke. In diesem Fall ist die Form des Kernes in etwa die Komplementärform des zu beschichtenden Formkörpers.

Bei beiden zuletzt beschriebenen Ausführungsformen kann der Kern an seiner Außenmantelfläche mehrere radial umlaufende Nuten besitzen, in die radial einwärts vorspringende Wülste des Übertragungsmaterials eingreifen, so daß ein axiales Verschieben von Übertragungsmaterial bezüglich Kern verhindert wird.

Natürlich ist es auch möglich, daß der Kern radial außen umlaufende Wülste besitzt, welche in umlaufende, in dem Übertragungsmaterial ausgenommene Nuten eingreifen. Der Kern besitzt zweckmäßigerweise eine zentrale durchgehende zur Drehachse konzentrische Bohrung zur Aufnahme einer Lagerwelle etc..

Das Übertragungsmaterial kann offenporig sein und aus Moosgummi, geschäumten Kunststoffen oder fasrigen Naturprodukten, beispielsweise Lammfell, bestehen. Das Übertragungsmaterial kann ferner geschlossenporig sein und aus Moosgummi, Kautschukarten und geschäumten Kunststoffen, insbesondere EPDM und Polyurethankunststoffen, aufgebaut sein. Die Zusammensetzung des Übertragungsmaterials und natürlich auch des Kerns ist zweckmäßigerweise derart zu wählen, daß es mit den Beschichtungsmaterialien verträglich ist, nicht quillt und auch chemisch nicht angegriffen wird. So sollte beispielsweise die Verträglichkeit gegenüber Beschichtungsmaterialien auf der Basis von Polyurethan-, Acrylat-, Epoxy und Kunstharzformulierungen gegeben sein. Zudem sollte das Übertragungsmaterial mechanischen Beanspruchungen möglichst lange standhalten.

Der rotationssymmetrische Kern der Walze kann aus Holz, Kunststoffen und Metallen, insbesondere Aluminium oder Stahl jeglicher Qualität, bestehen.

Bedingt dadurch, daß die Walze aus einem Kern und einem Übertragungsmaterial aufgebaut ist, kann das Übertragungsmaterial nach festgelegten Einsatz - bzw. Verschleißkriterien ausgesondert und erneuert werden, so daß die Anforderungen an die Gleichmäßigkeit der Verteilung des Beschichtungsmaterials erfüllt werden.

Das Übertragungsmaterial besitzt zweckmäßigerweise eine Dicke von 1 bis 100 mm, insbesondere 30 mm. Insbesondere dann, wenn das Übertragungsmaterial über die gesamte Länge eine gleichmäßige Schichtdicke besitzt, ist ein möglichst gleichmäßiger Anpreßdruck und somit auch eine möglichst gute Verteilung des Beschichtungsmaterials gegeben.

Als Transportvorrichtung der erfindungsgemäßen Vorrichtung können alle bisher bekannten Transportvorrichtungen Anwendung finden. Vorzugsweise dient die Transportvorrichtung jedoch zum gleichzeitigen Transport von mehreren in etwa gleichmäßig beabstandeten Formkörpern. Bei einer derartigen Transportvorrichtung kann es sich beispielsweise um einen Transportstern oder eine ähnliche Vorrichtung handeln. Vorzugsweise stellt die Transportvorrichtung jedoch eine übliche Transportkette dar, in der die zu beschichtenden Formkörper horizontal liegend und gleichzeitig beabstandet drehbar gehaltert sind.

Die erfindungsgemäße Vorrichtung weist vorzugsweise mehrere Walzen zum gleichzeitigen Beschichten einer der Zahl der Walzen entsprechenden Anzahl von Formkörpern auf. Der Abstand der Walzen voneinander entspricht dabei in etwa dem Abstand der Formkörper voneinander in der Transportvorrichtung. Die Walzen sind dabei vorzugsweise in einem Hubschlitten gehaltert, der ausgehend von einer Ausgangslage derart in Richtung auf die Transportvorrichtung bewegt wird, daß die Walzen in etwa gleichzeitig an die zu beschichtenden Formkörper angedruckt werden. In diesem angedrückten Zustand wird dann der Hubschlitten mit der gleichen Geschwindigkeit wie der Transportvorrichtung sowie parallel zu dieser Transportvorrichtung bewegt, so daß die Walzen gegen die Formkörper angedrückt gehalten werden. Nach einer vorbestimmten Strecke bzw. nach einer vorbestimmten Zeit wird der Hubschlitten mit den Walzen von den Formkörpern abgehoben und kehrt wieder in seine Ausgangslage zurück.

Dieser Hubschlitten ist mit mindestens einem Aufgußkopf mit beispielsweise einer Gießleiste ausgestattet. Ist nur ein Aufgußkopf vorhanden, dann muß dieser derart hin- und herbewegt werden, daß jede Walze während eines Zyklus mit einer ausreichenden Beschichtungsmenge versehen wird. Die Beschichtungsmenge wird dabei vorzugsweise auf die Walzen in dem Zeitintervall übertragen, in dem sich die Walze nicht in Anlage an die Formkörper befinden.

Vorzugsweise ist der Hubschlitten jedoch mit einer der Zahl der Walzen entsprechenden Zahl von Aufgußköpfen ausgestattet. Diese sind in diesem Falle stationär bezüglich des Hubschlittens angeordnet. Mit anderen Worten, jeder Walze ist ein eigener Aufgußkopf zugeordnet.

Nach einer weiterhin bevorzugten Ausführungsform sind die Walzen an einer umlaufenden Endloskette drehbar gehaltert. Diese Endloskette wird derart geführt, daß mehrere Walzen gleichzeitig an die ihnen zugeordneten Formkörper in Anlage gehalten und mit der Geschwindigkeit der Transportvorrichtung parallel dazu bewegt werden. Diese Endloskette wird in etwa wie die Kette eines Raupenschleppers geführt.

Oben wurde dargelegt, daß die zu beschichtenden Formkörper bzw. Flaschen sowohl am Kopf als auch am Boden in der Transportvorrichtung drehbar gehaltert sind. Diese beidseitige Halterung ist primär dadurch bedingt, daß beim Andrücken der Walze aufgrund des hochviskosen Beschichtungsmaterials ein nicht zu vernachlässigender Druck ausgeübt werden muß, der natürlich durch die Halterung der Flasche aufzufangen ist.

Es kann nun in dem Bestreben, weiteres Gewicht einzusparen, auch erforderlich sein, den Boden einer Flasche zu beschichten. In diesem Fall ist die Lagerung der Flasche in der Transportvorrichtung nur am Kopf möglich, beispielsweise mit Hilfe eines in die Flaschenmündung eingreifenden Spreizdornes. Würde eine hier beschriebene Walze an eine derart gelagerte Flasche angedrückt werden, dann besteht jedoch eine große Gefahr, daß der Flaschenhals abbricht.

Um dieser Gefahr zu begegnen, wird die erfindungsgemäße Vorrichtung nach einer bevorzugten Ausführungsform mit mindestens einer Stützwalze ausgestattet, die der Walze zum Verteilen der Beschichtungsmasse gegenüberliegend angeordnet ist und zumindest in demjenigen Bereich, in dem die Walze gegen die zu beschichtende Flasche angedrückt wird, ebenfalls von der gegenüberliegenden Seite an die zu beschichtende Flasche gedrückt wird, so daß an der Halterung der Flasche am Mundstück nur geringe Belastungen auftreten. Diese Stützwalze muß natürlich mit der gleichen Geschwindigkeit wie die Transportvorrichtung und die zum Verteilen der Beschichtungsmasse dienenden Walze parallel zur zu beschichtenden Flasche geführt und bewegt werden.

Wird die Walze zum Verteilen der Beschichtungsmasse von oben gegen die zu beschichtende Flasche in Anlage gebracht, dann wird natürlich die genannte Stützwalze von unten quasi als Widerlager gegen die zu beschichtende Flasche gedrückt. Natürlich muß auch die Stützwalze drehbar gelagert sein.

Als Stützwalze kann man eine übliche zylindrische Walze zur Anwendung bringen. Zweckmäßigerweise besitzt jedoch diese Stützwalze die gleiche Form wie auch die Walze zum Verteilen der Beschichtungsmasse.

Nach einer weiterhin bevorzugten Ausführungsform sind mehrere, insbesondere zwei nebeneinanderliegende Stützwalzen vorgesehen, wobei der seitliche Abstand der beiden Stützwalzen derart gewählt ist, daß sie eine Art Bett bzw. Lager für die zu beschichtende Flasche bilden. Der seitliche Abstand der zueinander zeigenden Außenmantelflächen der Stützwalzen ist somit geringer als der Durchmesser der zu beschichtenden Flasche. Mit anderen Worten, verbindet man, in Richtung der Drehachsen gesehen, die Drehachse der Walze zum Verteilen der Beschichtungsmasse mit der Drehachse der Flasche und diese wiederum mit den beiden Drehachsen der Stützwalzen, dann ergibt sich ein Y, wobei dieses Y vorzugsweise "auf dem Kopf steht". Auch in diesem Fall können die Stützwalzen hinsichtlich ihrer Außenkontur ebenso geformt sein wie die Walze zum Verteilen der Beschichtungsmasse.

Die Erfindung wird nachstehend anhand der bevorzugten Ausführungsformen darstellenden Figuren näher erläutert. Von den Figuren zeigen:
- Fig. 1-3: jeweils eine zu beschichtende Flasche in Seitenansicht und die dazugehörige erfindungsgemäße Walze komplementärer Form im Schnitt;
- Fig. 4: eine skizzenhafte funktionelle Darstellung der erfindungsgemäßen Vorrichtung mit einem Hubschlitten mit mehreren Walzen und Aufgußköpfen;
- Fig. 5: eine der Fig. 4 entsprechende Darstellung mit jedoch nur einem Aufgußkopf;
- Fig. 6: eine der Fig. 4 entsprechende Darstellung, wobei jedoch die Walzen an einer umlaufenden Endloskette gehaltert sind;
- Fig. 7: eine der Fig. 6 entsprechende Darstellung, wobei jedoch nur zwei Aufgußköpfe vorhanden sind; und
- Fig. 8: eine perspektivische Ansicht eines zu beschichtenden Formkörpers mit dazugehöriger Walze und zugeordnetem Aufgußkopf.

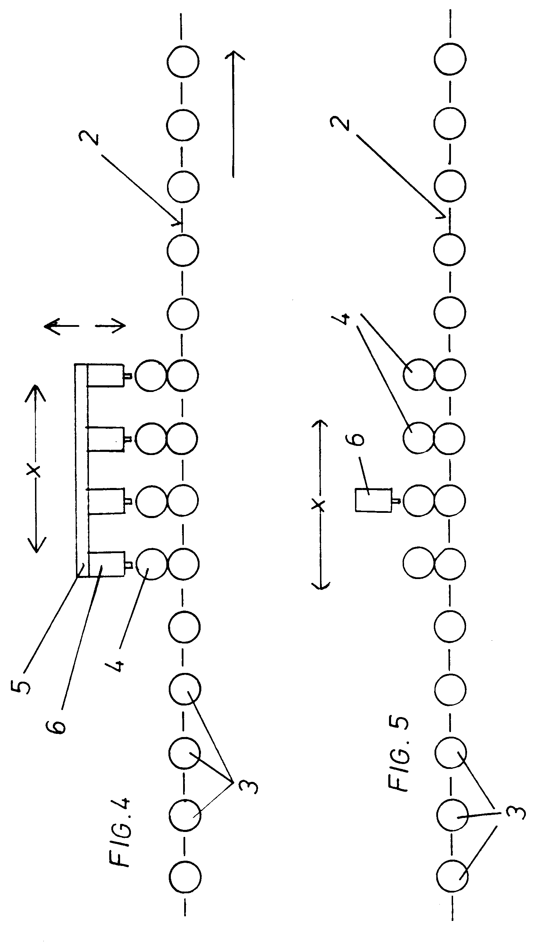

In der Fig. 4 ist eine Transportvorrichtung 2, hier eine Transportkette, der erfindungsgemäßen Vorrichtung in stark vereinfachter skizzierter Form gezeigt. Eine derartige Transportkette 2 ist bekannt. Die zu beschichtenden Formkörper, hier Flaschen 3, sind liegend gehaltert und mit in etwa gleichem Abstand parallel zueinander angeordnet. Die Flaschen sind dabei am Kopf und am Boden gehaltert, denn in diesen Bereichen besitzen die Flaschen eine ausreichende Wanddicke, so daß diese Bereiche nicht beschichtet werden müssen. Die Flaschen 3 können dabei um ihre Längsachse gedreht werden.

Der in der Fig. 4 gezeigte Hubschlitten 5 ist mit vier Walzen 4 ausgestattet, die weiter unten näher beschrieben sind. Diese Walzen 4 besitzen einen Abstand voneinander, der dem Abstand der Flaschen 3 zueinander entspricht. Jede der Walzen 4 ist mit einem separaten Aufgußkopf 6 ausgestattet, durch den das Beschichtungsmaterial mengendosiert auf die zugehörige Walze 4 aufgebracht wird.

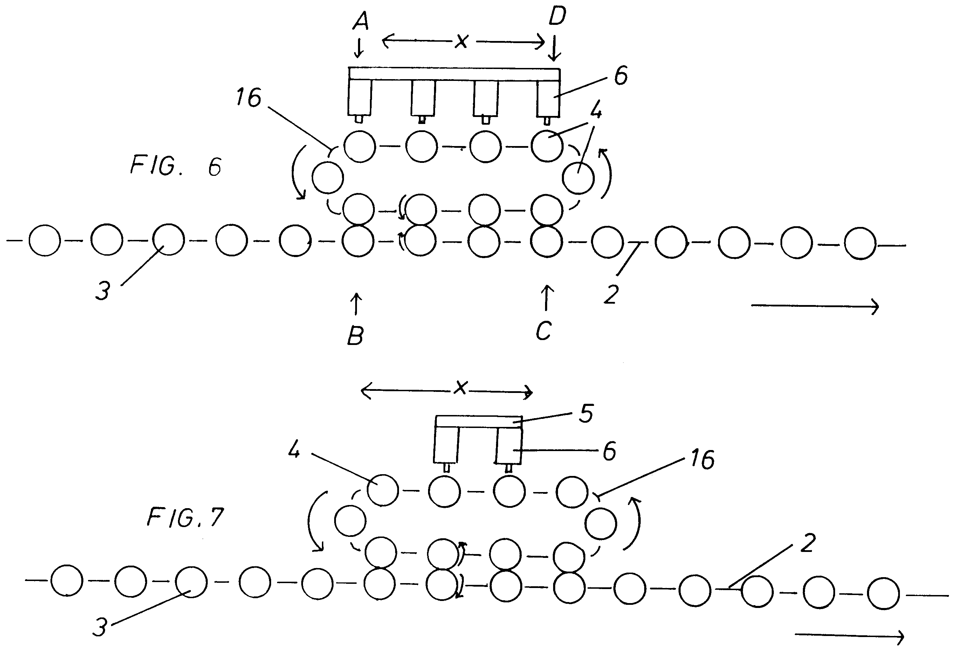

Der Hubschlitten 5 kann sowohl eine translatorische Hin- und Herbewegung als auch eine Hubbewegung gemäß den in der Fig. 5 gezeigten Pfeilen durchführen. Zur Durchführung des Beschichtungsvorganges wird der Hubschlitten von einer nicht gezeigten Ausgangsposition, in der Walzen 4 und Flaschen 3 keinen Kontakt miteinander haben, in die in der Fig. 4 gezeigte Position gebracht. Von dort wird der Hubschlitten 5 parallel zur Transportkette 2 und mit der gleichen Geschwindigkeit in Richtung des nach rechts weisenden Pfeiles bewegt. Dabei wird das auf die Walzen 4 aufgebrachte Beschichtungsmaterial auf die Flaschen 4 übertragen und auf deren Außenoberfläche verteilt. Die Flaschen 3 und die Walzen 4 werden dabei beide gegenläufig zwangsgedreht.

Nach einer vorbestimmten Zeit bzw. nach einer vorbestimmten Wegstrecke wird der Hubschlitten angehoben und kehrt in seine nicht gezeigte Ausgangsposition zurück. Während dieses Bewegungsablaufes wird das Beschichtungsmaterial mengendosiert auf die weiterhin gedrehten Walzen 4 aufgebracht.

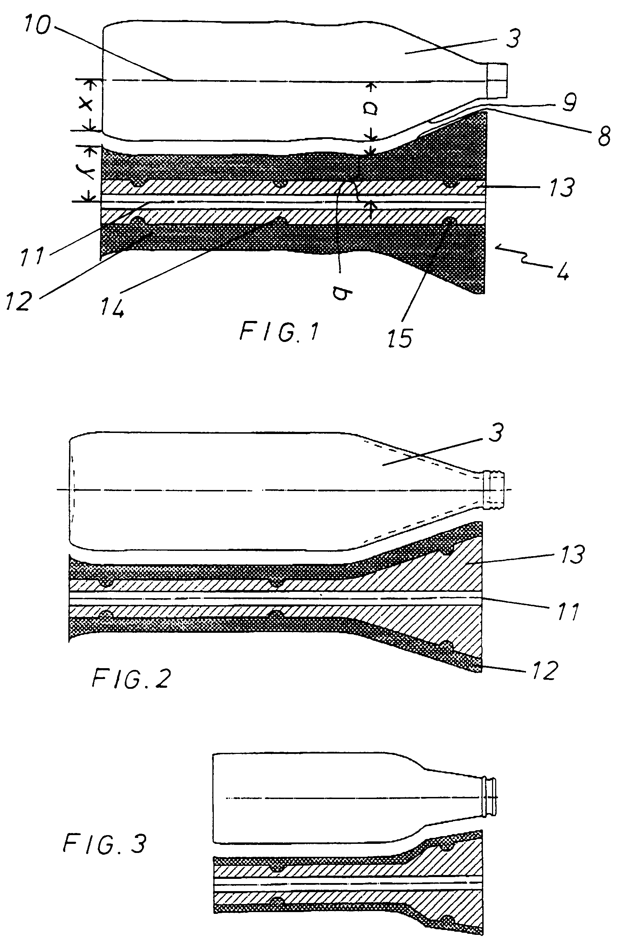

Die dabei zur Anwendung gebrachten Formkörper und Walzen können die in den Fig. 1 bis 3 gezeigten Formen besitzen. Wie aus diesen Figuren hervorgeht, besitzt die Außenkontur 8 der erfindungsgemäßen Walze 4 eine zur Außenkontur 9 der Flasche 3 komplementäre Form. Dabei ist die Summe aus dem Radius a (man vergleiche Fig. 1) der Flasche 3 und dem Radius b der Walze 4 gleich dem Abstand der Längsachse der Flasche 10 und der Längsachse 11 der Walze 4 im angedrückten Zustand. Mit anderen Worten, die Summe von a und b entspricht der Summe von x und y der Fig. 1 dabei wird jedoch unterstellt, daß das Übertragungsmaterial 12 der Walze 4 im angedrückten Zustand nicht komprimiert wird. Tatsächlich ist dies jedoch der Fall. Obige Berechnungen beziehen sich somit auf den Zustand, in dem die Walze 4 ohne Kompression des Übertragungsmaterials 12 an die Flasche 3 angedrückt ist. Beim tatsächlichen Beschichtungsvorgang wird das Übertragungsmaterial 12 jedoch geringfügig komprimiert.

Die erfindungsgemäße Walze 4 und die Flasche 3 werden an ihren beiden Stirnseiten drehbar gehaltert und gelagert. Die dafür erforderlichen Einrichtungen sind bekannt und daher nicht gezeigt.

Die Walze 4 besitzt einen hohlzylindrischen Kern 13, der außen mit dem Übertragungsmaterial 12 umgeben ist. Der Kern 13 besitzt auf seiner Außenmantelfläche mehrere radial umlaufende Nuten 14, in die radial einwärts vorspringende Wülste 15 des Übertragungsmaterials 12 eingreifen.

Bei der in der Fig. 2 gezeigten Ausführungsform ist der Kern 13 quasi für die Negativform der Walze 4 ursächlich. Dieser Kern 13 trägt auf seiner Außenmantelfläche das Übertragungsmaterial 12, welches entlang der Längsachse 11 in etwa die gleiche Schichtdicke besitzt. Bedingt durch diese gleichmäßige Schichtdicke wird gewährleistet, daß der Anpreßdruck und damit auch die Verteilung des Beschichtungsmaterials auf der gesamten Außenoberfläche der Flasche 3 in etwa gleich ist.

Die in der Fig. 5 gezeigte Darstellung entspricht im wesentlichen der Darstellung der Fig. 4. Der Unterschied besteht darin, daß bei der in der Fig. 5 gezeigten Ausführungsform nur ein Aufgußkopf 6 vorhanden ist, der hin- und herbewegt wird, so daß das Beschichtungsmaterial auf alle vier Walzen 4 aufgebracht wird. Der Aufgußkopf 6 ist somit bezüglich des nicht gezeigten Hubschlittens hin- und herbewegbar.

Auch die in der Fig. 6 gezeigte Darstellung entspricht in etwa der in der Fig. 4 gezeigten Darstellung. Allerdings sind die Walzen 4 an einer raupenschlepperartig umlaufenden Endloskette 16 gehaltert. Dabei werden die Walzen 4 ausgehend von einer Ausgangsposition A zur Transportkette 2 geführt und in Anlage an eine Flasche 3 gebracht. Von dieser Position B wird die Walze 4 parallel mit der Transportkette 2 unter gegenläufigem Drehen von Walze 4 und Flasche 3 bis zu einem Punkt C geführt. Dort wird die Walze 4 von der Flasche 3 abgehoben und zum Punkt D geführt. Dort wird die Beschichtungsmasse mittels des Aufgußkopfes 6 auf die Walze 4 aufgebracht.

Der Hubschlitten 5 besitzt dabei vier Aufgußköpfe 6 und kann entsprechend dem oberen Pfeil x hin- und herbewegt werden.

Auch bei dieser Ausführungsform werden die Aufgußköpfe 6 mit dem dazugehörigen Schlitten waagerecht hin- und herbewegt. Ein Anheben und Wiederabsenken ist dabei jedoch nicht erforderlich.

Die in der Fig. 7 gezeigte Ausführungsform entspricht in etwa der in der Fig. 6 gezeigten Ausführungsform. Der Unterschied besteht darin, daß der Schlitten 5 nur zwei Aufgußköpfe besitzt, die entsprechend dem Teil x hin- und herbewegt werden.

Die Rotationsgeschwindigkeit von Flasche und Walze kann im übrigen bei allen Ausführungsformen insbesondere 1 U/min. bis 300 U/min. betragen. Diese Rotationsgeschwindigkeit ist zweckmäßigerweise einstellbar.

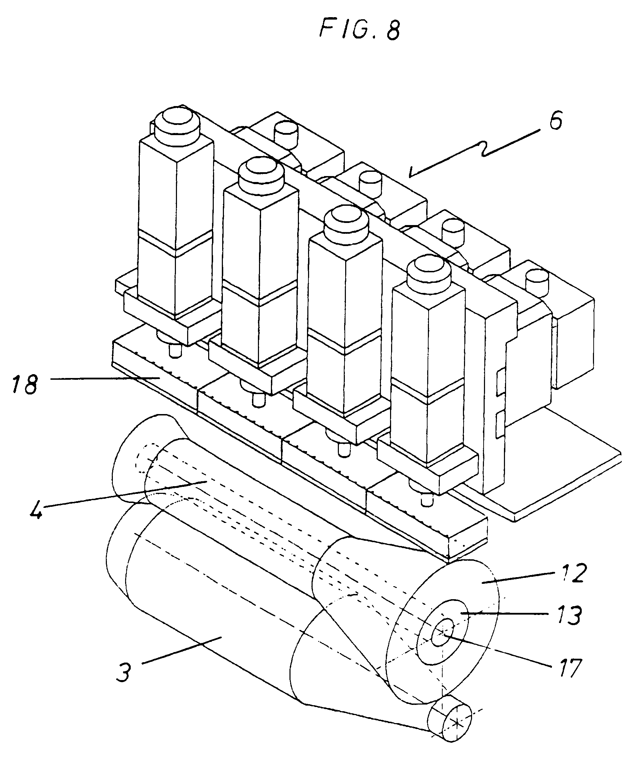

In der Fig. 8 ist ein typischer Aufgußkopf 6 mit einer Gießleiste 18 gezeigt. Aus dieser Gießleiste 18 wird das erforderliche Beschichtungsmaterial mengendosiert auf die Walze 4 übertragen. Die Ausgestaltung des Aufgußkopfes ist dabei üblicher Art.

Die Walze 4 besitzt den bereits oben beschriebenen Kern 13 mit dem elastischen Übertragungsmaterial 12 und einer zentralen, zur Drehachse konzentrischen durchgehenden Bohrung 17. Diese Walze 4 wird gegen die Flasche 3 angedrückt und überträgt dabei das Beschichtungsmaterial auf die Flasche 3 und verteilt es auf deren Außenoberfläche.

Bedingt dadurch, daß jeder zu beschichtenden Flasche bzw. jedem zu beschichtenden Formkörper eine "eigene" Walze zugeordnet ist, kann auch dem häufig auftretenden Umstand Rechnung getragen werden, daß in der Transportvorrichtung 2 des öfteren ein Platz für einen Formkörper 3 nicht mit dem zu beschichtenden Formkörper 3 besetzt ist.

Daher kann die erfindungsgemäße Vorrichtung mit einer nicht gezeigten Detektiereinrichtung ausgestattet werden, die feststellt, ob an einem Platz für einen Formkörper in der Transportvorrichtung 2 tatsächlich ein derartiger Formkörper vorhanden ist oder nicht. Ist kein zu beschichtender Formkörper vorhanden, dann wird diese Information einer Steuerungs- und Regelvorrichtung zum Mengendosieren des Beschichtungsmaterials mitgeteilt. Diese Steuerungsvorrichtung trägt dann dafür Sorge, daß kein Beschichtungsmaterial auf die Walze 4 übertragen wird, wenn der zu beschichtende Formkörper bzw. die zu beschichtende Flasche 3 in der Transportvorrichtung 2 nicht vorhanden ist. Auf diese Weise wird sichergestellt, daß für jede Flasche die vorgesehene Menge an Beschichtungsmaterial auf die jeweilige Walze aufgetragen und von dieser dann auf die zu beschichtende Flasche 3 übertragen wird. Mit anderen Worten, es wird vermieden, daß das in einem Arbeitszyklus auf die jeweilige Walze aufgetragene Beschichtungsmaterial nicht auf die Flasche 3 übertragen wird sondern auf der Walze 4 verbleibt, auf die dann im nächsten Arbeitszyklus nochmal die gleiche Beschichtungsmenge aufgebracht wird, so daß im Anschluß daran auf die nächste zu beschichtende Flasche die doppelte Beschichtungsmenge übertragen wird. Auf diese Weise wird eine reproduzierbare, gleichmäßige und den Anforderungen gerechtwerdende Beschichtung erzielt.

## Patentansprüche

1. Vorrichtung zur Beschichtung der Außenoberfläche von rotationssymmetrischen Formkörpern, insbesondere Flaschen, mit einer Vorrichtung (2) zum Transportieren und drehbaren Haltern der zu beschichtenden Formkörper (Transportvorrichtung), mit einem Aufgußkopf (6) für die Beschichtungsmasse und mit mindestens einer drehbaren, an den Formkörper (3) andrückbaren und wieder abhebbaren Walze (4), deren Drehachse (11) im angedrückten Zustand zumindest im wesentlichen parallel zur Drehachse (10) des Formkörpers (3) angeordnet ist, zum Verteilen der Beschichtungsmasse auf der Außenoberfläche des Formkörpers (3),
dadurch **gekennzeichnet,**
daß die Walze (4) eine zur Außenkontur (9) des Formkörpers (3) komplementär geformte Außenkontur (8) besitzt.

2. Vorrichtung nach Anspruch 1,
dadurch **gekennzeichnet,**
daß die Summe der Radien von Walze (4) und Formkörper (3) an jedem Punkt entlang der Längs- bzw. Drehachsen (10;11) in etwa dem Abstand der beiden Drehachsen (10;11) im angedrückten Zustand entspricht.

3. Vorrichtung nach Anspruch 1 oder 2,
dadurch **gekennzeichnet,**
daß das Beschichtungsmaterial zuerst auf die Walze (4) aufgebracht und dann mittels letzterer auf den Formkörper (3) übertragen wird.

4. Vorrichtung nach einem der vorhergehenden Ansprüche,
dadurch **gekennzeichnet,**
daß der Formkörper (3) und die Walze (4) gegenläufig zwangsgedreht sind, insbesondere mit der gleichen Umdrehungsgeschwindigkeit.

5. Vorrichtung nach einem der vorhergehenden Ansprüche,
dadurch **gekennzeichnet,**
daß die Walze (4) einen nicht elastischen Kern (13) und ein außen darauf aufgebrachtes elastisches Übertragungsmaterial (12), insbesondere mit gleichmäßiger Schichtdicke, besitzt.

6. Vorrichtung nach einem der vorhergehenden Ansprüche,
dadurch **gekennzeichnet,**
daß mit der Transportvorrichtung (2) mehrere in etwa gleichmäßig beabstandete Formkörper (3) kontinuierlich transportiert werden und daß mehrere Walzen (4) vorgesehen sind, wobei der Abstand der Walzen (4) voneinander in etwa dem Abstand der Formkörper (3) voneinander entspricht.

7. Vorrichtung nach Anspruch 6,
dadurch **gekennzeichnet,**
daß alle Walzen (4) in einem Hubschlitten (5) gehaltert sind, der ausgehend von einer Ausgangslage derart in Richtung auf die Transportvorrichtung (2) bewegt wird, daß die Walzen (4) in etwa gleichzeitig an den ihnen jeweils zugeordneten Formkörper (3) angedrückt werden, der dann mit der Geschwindigkeit der Transportvorrichtung (2) sowie parallel dazu bewegt wird, der von der Transportvorrichtung (2) wegbewegt wird und der wieder in seine Ausgangslage zurückkehrt.

8. Vorrichtung nach Anspruch 7,
dadurch **gekennzeichnet,**
daß jede der Walzen (4) des Hubschlittens (5) mit einem separaten Aufgußkopf (6) ausgestattet ist.

9. Vorrichtung nach Anspruch 7,
dadurch **gekennzeichnet,**
daß der Hubschlitten (5) mit nur einem Aufgußkopf (6) ausgestattet ist, der derart hin- und herbewegt werden kann, daß die erforderliche Beschichtungsmasse auf jede Walze (4) aufgebracht wird.

10. Vorrichtung nach Anspruch 6,
dadurch **gekennzeichnet,**
daß die Walzen (4) an einer umlaufenden Endloskette (16) gehaltert sind, welche derart geführt ist, daß einige der Walzen (4) gleichzeitig an den ihnen jeweils zugeordneten Formkörper (3) in Anlage gehalten und mit der Geschwindigkeit der Transportvorrichtung (2) parallel dazu bewegt werden.

11. Vorrichtung nach einem der vorhergehenden Ansprüche,
dadurch **gekennzeichnet,**
daß die Formkörper (3) in der Transportvorrichtung (2) horizontal parallel zueinander liegend gehaltert sind und die Walze(n) (4) von oben auf die Formkörper (3) angedrückt wird(werden).

12. Walze zur Beschichtung der Außenoberfläche von rotationssymetrischen Formkörpern, insbesondere Flaschen,
dadurch **gekennzeichnet,**
daß die Walze (4) eine zur Außenkontur (9) des zu beschichtenden Formkörpers (3) komplementär geformte Außenkontur (8) besitzt.

13. Walze nach Anspruch 12,
dadurch **gekennzeichnet,**
daß die Summe der Radien von Walze (4) und Formkorper (3) an jedem Punkt entlang ihrer Längs- bzw. Drehachsen (10;11) in etwa dem Abstand der beiden Drehachsen (10; 11) entspricht, wenn diese parallel zueinander in Anlage gebracht sind.

14. Walze nach Anspruch 12 oder 13,
dadurch **gekennzeichnet,**
daß die Walze (4) einen nicht elastischen Kern (13) und ein außen darauf aufgebrachtes elastisches Übertragungsmaterial (12), insbesondere mit gleichmäßiger Schichtdicke, besitzt.

15. Verfahren zum Beschichten der Außenoberfläche von rotationssymmetrischen Formkörpern, insbesondere Glasflaschen, wobei ein Beschichtungsmaterial auf den drehbar gelagerten Formkörper aufgebracht und durch Andrücken einer drehbaren, rotationssymmetrischen Walze, deren Drehachse im angedrückten Zustand in etwa parallel zur Drehachse des Formkörpers angeordnet ist, an den Formköper und durch gegenläufiges Drehen von Walze sowie Formkörper auf der Oberfläche des Formkörpers verteilt und nach Abheben der Walze auf per se bekannte Weise getrocknet wird,
dadurch **gekennzeichnet,**
daß man eine Walze einsetzt, deren Außenkontur komplementär zur Außenkontur des Formkörpers geformt ist.

16. Verfahren nach Anspruch 15,
dadurch **gekennzeichnet,**
daß man die Beschichtungsmasse zuerst auf die Walze aufträgt und dann zeitversetzt mit ihrer Hilfe auf den Formkörper überträgt.

17. Verfahren nach Anspruch 15,
dadurch **gekennzeichnet,**
daß man das Beschichtungsmaterial auf die Walze aufträgt und dabei gleichzeitig auf den Formkörper überträgt.

## Claims

1. Apparatus for the coating of the outer surface of rotationally symmetrical mouldings, especially bottles, with a device (2) for transporting and rotatably holding the mouldings to be coated (transport device), with a sprinkler head (6) for the coating material and with at least one rotatable roller (4) which can be pressed onto the moulding (3) and can be lifted off again and the axis of rotation (11) of which, in the pressed-on state, is arranged at least essentially parallel to the axis of rotation (10) of the moulding (3), for distributing the coating material on the outer surface of the moulding (3), characterized in that the roller (4) possesses an outer contour (8) shaped complementarily to the outer contour (9) of the moulding (3).

2. Apparatus according to Claim 1, characterized in that the sum of the radii of the roller (4) and the moulding (3) at any point along the longitudinal axes or axes of rotation (10; 11) corresponds approximately to the distance between the two axes of rotation (10; 11) in the pressed-on state.

3. Apparatus according to Claim 1 or 2, characterized in that the coating material is first applied to the roller (4) and is then transferred onto the moulding (3) by means of the latter.

4. Apparatus according to one of the preceding claims, characterized in that the moulding (3) and the roller (4) are positively rotated in opposition, especially at the same rotational speed.

5. Apparatus according to one of the preceding claims, characterized in that the roller (4) possesses an inelastic core (13) and an elastic transfer material (12) applied to the outside of the latter and having especially a uniform layer thickness.

6. Apparatus according to one of the preceding claims, characterized in that a plurality of approximately uniformly spaced mouldings (3) are transported continuously by means of the transport device (2), and in that a plurality of rollers (4) are provided, the mutual spacing of the rollers (4) corresponding approximately to the mutual spacing of the mouldings (3).

7. Apparatus according to Claim 6, characterized in that all the rollers (4) are held in a lifting carriage (5) which, starting from an initial position, is moved in the direction of the transport device (2) in such a way that the rollers (4) are pressed approximately simultaneously onto the moulding (3) which is assigned to them in each case and which is then moved at the speed of the transport device (2) and parallel to the latter, is moved away from the transport device (2) and returns to its initial position again.

8. Apparatus according to Claim 7, characterized in that each of the rollers (4) of the lifting carriage (5) is equipped with a separate sprinkler head (6).

9. Apparatus according to Claim 7, characterized in that the lifting carriage (5) is equipped with only one sprinkler head (6) which can be moved to and fro in such a way that the required coating material is applied to each roller (4).

10. Apparatus according to Claim 6, characterized in that the rollers (4) are held on a revolving endless chain (16), which is guided in such a way that some of the rollers (4) are kept simultaneously in bearing contact on the moulding (3) assigned to them in each case and are moved at the speed of the transport device (2) parallel to the latter.

11. Apparatus according to one of the preceding claims, characterized in that the mouldings (3) are held in the transport device (2) so as to lie horizontally parallel to one another and the rollers (4) are pressed onto the mouldings (3) from above.

12. Roller for the coating of the outer surface of rotationally symmetrical mouldings, especially bottles, characterized in that the roller (4) possesses an outer contour (8) shaped complementarily to the outer contour (9) of the moulding (3) to be coated.

13. Roller according to Claim 12, characterized in that the sum of the radii of the roller (4) and the moulding (3) at any point along their longitudinal axes or axes of rotation (10; 11) corresponds approximately to the distance between the two axes of rotation (10; 11) when the said roller and said moulding are brought to bear parallel to one another.

14. Roller according to Claim 12 or 13, characterized in that the roller (4) possesses an inelastic core (13) and an elastic transfer material (12) applied to the outside of the latter and having especially a uniform layer thickness.

15. Method for the coating of the outer surface of rotationally symmetrical mouldings, especially glass bottles, coating material being applied to the rotatably mounted moulding and being distributed on the surface of the moulding by the pressing of a rotatable rotationally symmetrical roller, the axis of rotation of which, in the pressed-on state, is arranged approximately parallel to the axis of rotation of the moulding, onto the moulding and by the rotation of the roller and moulding in opposition, and, after the roller has been lifted off, being dried in a way known per se, characterized in that a roller, the outer contour of which is shaped complementarily to the outer contour of the moulding, is used.

16. Method according to Claim 15, characterized in that the coating material is first applied to the roller and is then transferred, staggered in time, onto the moulding by means of the latter.

17. Method according to Claim 15, characterized in that the coating material is applied to the roller and is transferred simultaneously onto the moulding.

## Revendications

1. Dispositif de revêtement de la surface extérieure de corps de forme à symétrie de rotation, en particulier des bouteilles, comprenant un dispositif (2) pour le transport et le support rotatif des corps de forme à revêtir (dispositif de transport), comprenant une tête d'application (6) pour la masse de revêtement et au moins un rouleau (4) tournant pouvant être serré contre le corps de forme (3) et en être décollé, l'axe de rotation (11) du rouleau étant disposé, à l'état serré, au moins essentiellement parallèlement à l'axe de rotation (10) du corps de forme (3), destiné à étaler la masse de revêtement sur la surface extérieure du corps de forme (3),
caractérisé en ce que le rouleau (4) présente un contour extérieur (8) qui est configuré de façon complémentaire au contour extérieur (9) du corps de forme (3).

2. Dispositif selon la revendication 1, caractérisé en ce que la somme des rayons du rouleau (4) et du corps de forme (3), à chaque point le long des axes longitudinaux ou axes de rotation (10; 11), correspond à peu près à la distance entre les deux axes de rotation (10; 11) à l'état serré.

3. Dispositif selon la revendication 1 ou 2, caractérisé en ce que la matière de revêtement est d'abord appliquée sur le rouleau (4), puis transférée sur le corps de forme (3) au moyen de ce rouleau.

4. Dispositif selon l'une des revendications précédentes, caractérisé en ce que le corps de forme (3) et le rouleau (4) sont entraînés en rotation forcée antagoniste, en particulier à la même vitesse de rotation.

5. Dispositif selon l'une des revendications précédentes, caractérisé en ce que le rouleau (4) comporte une âme (13) non élastique et un matériau de transfert élastique (12) appliqué sur celle-ci, en particulier un matériau présentant une épaisseur de couche uniforme.

6. Dispositif selon l'une des revendications précédentes, caractérisé en ce que le dispositif de transport (2) transporte de façon continue plusieurs corps de forme (3) à peu près équidistants les uns des autres, et en ce que plusieurs rouleaux (4) sont prévus, la distance des rouleaux (4) les uns par rapport aux autres correspondant à peu près à la distance des corps de forme (3) les uns par rapport aux autres.

7. Dispositif selon la revendication 6, caractérisé en ce que tous les rouleaux (4) sont maintenus dans un chariot de levage (5) qui, en partant d'une position de départ, est déplacé en direction du dispositif de transport (2) de manière telle que les rouleaux (4) soient serrés à peu près simultanément contre le corps de forme (3) qui leur est associé, ce chariot étant en-suite déplacé à la vitesse du dispositif de transport (2) et parallèlement à celui-ci, étant éloigné du dispositif de transport (2) et retournant enfin dans sa position de départ.

8. Dispositif selon la revendication 7, caractérisé en ce que chacun des rouleaux (4) du chariot de levage (5) est équipé d'une tête d'application séparée (6).

9. Dispositif selon la revendication 7, caractérisé en ce que le chariot de levage (5) ne comporte qu'une seule tête d'application (6), qui peut être déplacée en va-et-vient de manière telle que la masse de revêtement nécessaire puisse être déposée sur chacun des rouleaux (4).

10. Dispositif selon la revendication 6, caractérisé en ce que les rouleaux (4) sont montés sur une chaîne sans fin (16) en circulation, qui est guidée de manière telle que certains des rouleaux (4) soient amenés simultanément en contact avec les corps de forme (3) respectifs qui leur sont associés, et soient déplacés à la vitesse du dispositif de transport (2) et parallèlement à celui-ci.

11. Dispositif selon l'une des revendications précédentes, caractérisé en ce que les corps de forme (3) sont logés dans le dispositif de transport (2) à l'état couché à l'horizontale, parallèlement les uns aux autres, et en ce que le(s) rouleau(x) (4) est (sont) serré(s) par le haut contre les corps de forme (3).

12. Rouleau pour le revêtement de la surface extérieure de corps de forme à symétrie de rotation, en particulier des bouteilles,
caractérisé en ce que le rouleau (4) présente un contour extérieur (8) qui est configuré de façon complémentaire au contour extérieur (9) du corps de forme (3) à revêtir.

13. Rouleau selon la revendication 12, caractérisé en ce que la somme des rayons du rouleau (4) et du corps de forme (3), à chaque point le long de leurs axes longitudinaux ou axes de rotation (10; 11), correspond à peu près à la distance entre les deux axes de rotation (10; 11), lorsqu'ils ont été amenés en contact l'un avec l'autre, parallèlement l'un à l'autre.

14. Rouleau selon la revendication 12 ou 13, caractérisé en ce que le rouleau (4) comporte une âme non élastique (13) et un matériau de transfert élastique (12) appliqué à l'extérieur de celle-ci, présentant notamment une épaisseur de couche uniforme.

15. Procédé de revêtement de la surface extérieure de corps de forme à symétrie de rotation, en particulier des bouteilles en verre, une matière de revêtement étant appliquée sur le corps de forme logé de façon à pouvoir tourner, et étant étalée sur la surface du corps de forme par application, contre le corps de forme, d'un rouleau tournant, symétrique en rotation, dont l'axe de rotation, à l'état de serrage, est disposé à peu près parallèlement à l'axe de rotation du corps de forme, et par rotation antagoniste du rouleau et du corps de forme, la matière étant séchée d'une manière connue en soi après le décollement du rouleau,
caractérisé en ce que l'on met en oeuvre un rouleau, dont le contour extérieur est configuré de façon complémentaire au contour extérieur du corps de forme.

16. Procédé selon la revendication 15, caractérisé en ce que l'on applique la masse de revêtement d'abord sur le rouleau, puis la transfère, de façon décalée dans le temps et au moyen du rouleau, sur le corps de forme.

17. Procédé selon la revendication 15, caractérisé en ce que l'on applique la matière de revêtement sur le rouleau et la transfère alors simultanément sur le corps de forme.
